# DEMANDE DE BREVET EUROPEEN

(11) **EP 1 024 646 A1**
(43) Date de publication de la demande: **02.08.2000**
(21) Numéro de dépôt: 99440013.3
(22) Date de dépôt: 29.01.1999
(51) Int. Cl.: H04M 1/72

(54) **Dispositif de raccordement d'une embase pour terminal sans fil à une prise murale**

(71) Demandeur: ALCATEL, 75008 Paris (FR)
(72) Inventeur: Marchesin, Armand, 67370 Griesheim/Souffelweyersheim (FR)
(74) Mandataire: Scheer, Luc

(57) **Abrégé**

L'invention concerne un dispositif de raccordement d'une embase pour terminal sans fil à une prise murale.

Selon l'invention, ce dispositif de raccordement consiste en une fiche solidaire de l'embase, la fiche étant directement enfichable dans la prise murale.

L'invention permet de supprimer les câbles de connexion des embases (base, chargeur) aux prises murales.

## Description

Le domaine de l'invention est celui des terminaux téléphoniques. Plus précisément, la présente invention concerne un dispositif de raccordement d'une embase pour terminal sans fil à une prise murale.

Dans la suite de cette description, on entend par embase un support de combiné téléphonique, ce combiné étant généralement un combiné sans fil ou un radiotéléphone. Le support peut être un simple chargeur du combiné sans fil ou alors une base apte à assurer non seulement la charge du combiné lorsque celui-ci est posé sur la base, mais également à communiquer, par exemple par voie radio, avec le combiné.

Le raccordement d'une telle embase à une prise murale est classiquement réalisé par l'intermédiaire d'un ou de plusieurs câbles. Pour un simple chargeur de combiné, un câble unique relie le chargeur au secteur (prise 110 ou 220 volts), éventuellement par l'intermédiaire d'un bloc convertisseur de tension. La charge du combiné s'opère lorsque le combiné est posé sur le chargeur, par exemple par l'intermédiaire de plots de contact ou de manière inductive. Pour une base reliée au réseau téléphonique et communiquant par voie radio avec le combiné, deux câbles sont nécessaires, l'un pour cette liaison au réseau téléphonique et l'autre pour établir une liaison avec l'alimentation secteur (à des fins d'alimentation en énergie suffisante, notamment pour la recharge du combiné), également éventuellement par l'intermédiaire d'un bloc convertisseur de tension.

La présente invention a notamment pour objectif de supprimer au moins un câble de liaison entre une embase et une prise murale, afin de simplifier l'installation de l'embase et de réduire le coût global.

Ces objectifs, ainsi que d'autres qui apparaîtront par la suite, sont atteints grâce au fait que le raccordement de l'embase à la prise murale est assuré par une fiche solidaire de l'embase, cette fiche étant directement enfichable dans la prise murale.

La fiche assure donc un support de l'embase et il y a une absence totale de câble entre l'embase et la fiche.

Dans un mode de réalisation préférentiel, la fiche est une fiche secteur directement enfichable dans une prise secteur.

Dans un autre mode de réalisation, la fiche est une fiche téléphonique directement enfichable dans une prise téléphonique.

Avantageusement, l'embase constitue un chargeur d'un terminal sans fil.

Préférentiellement, l'embase est apte à communiquer par voie radio avec le terminal sans fil.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 est une vue schématique d'une embase comportant un dispositif de raccordement selon l'invention ;
- la figure 2 représente une embase comportant une fiche téléphonique.

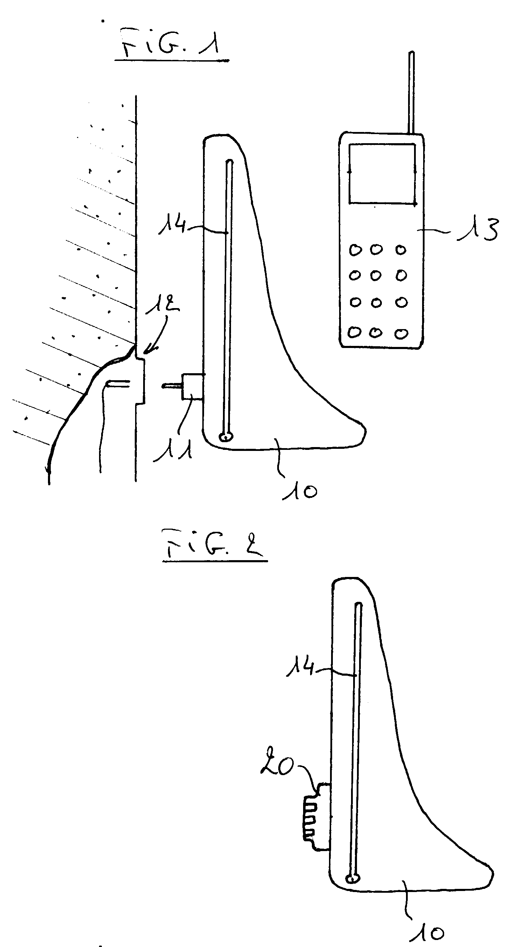

La figure 1 est une vue schématique d'une embase comportant un dispositif de raccordement selon l'invention.

Une embase 10 selon l'invention comporte une fiche 11 qui est directement enfichable dans une prise murale 12. Une fois enfichée, la fiche 11 constitue un support de l'embase 10. La fiche 11 est ici une fiche secteur et la prise 12 une prise secteur. Un terminal sans fil 13, par exemple un radiotéléphone, est apte à coopérer avec l'embase 10, à des fins de recharge. L'embase 10 peut comporter une antenne 14 pour communiquer avec le terminal 13. L'antenne 14 peut également être intégrée dans l'embase 10.

Dans ce mode de réalisation, la fiche 11 est donc une fiche secteur directement enfichable dans une prise secteur. L'embase 10 est soit un simple chargeur et aucune connexion supplémentaire n'est nécessaire, soit une base domestique avec antenne 14 destinée à communiquer avec le terminal 13 et doit dans ce cas être également raccordée à une prise téléphonique, par l'intermédiaire d'un câble téléphonique classique.

Dans un autre mode de réalisation, représenté à la figure 2, la fiche solidaire de l'embase 10 est une fiche téléphonique 20 directement enfichable dans une prise téléphonique. L'embase 10 peut être un simple chargeur et dans ce cas aucune connexion supplémentaire n'est nécessaire, le terminal 13 pouvant être télérechargé par la ligne téléphonique. Une téléalimentation ne fonctionne en principe que lorsqu'il y a prise de ligne et c'est pourquoi une batterie rechargeable est de préférence intégrée dans l'embase 10. Des prises de ligne peuvent être générées automatiquement (par un logiciel intégré dans l'embase 10) pour recharger cette batterie. De ce fait, la batterie intégrée peut être utilisée pour recharger celle du terminal 13 et/ou assurer des communications avec le terminal 13. A des fins de communication, une antenne 14 est prévue, cette antenne pouvant également être intégrée dans l'embase 10.

Une variante de réalisation consiste à raccorder par câble l'embase 10 de la figure 2 au secteur, à des fins d'alimentation.

L'invention permet donc de supprimer un câble de liaison entre une embase et une prise murale. En cas de liaison à une prise secteur, des moyens convertisseurs de tension peuvent être compris dans l'embase.

L'invention concerne également une embase pour terminal sans fil comportant une fiche telle que décrite ci-dessus.

## Revendications

1. Dispositif de raccordement d'une embase (10) pour terminal sans fil (13) à une prise murale (12), caractérisée en ce qu'il consiste en une fiche (11, 20) solidaire de ladite embase (10), ladite fiche (11, 20) étant directement enfichable dans ladite prise murale (12).

2. Dispositif selon la revendication 1, caractérisé en ce que ladite fiche est une fiche secteur (11) directement enfichable dans une prise secteur (12).

3. Dispositif selon la revendication 1, caractérisée en ce que ladite fiche est une fiche téléphonique (20) directement enfichable dans une prise téléphonique.

4. Dispositif selon l'une des revendications 1 à 3, caractérisé en ce que ladite embase (10) constitue un chargeur d'un terminal sans fil (13).

5. Dispositif selon l'une des revendications 1 à 4, caractérisé en ce que ladite embase est apte à communiquer par voie radio avec ledit terminal sans fil (13).

6. Embase (10) pour terminal sans fil (13), caractérisée en ce qu'elle comporte une fiche (11, 20) selon l'une des revendications 1 à 5.
